# EUROPÄISCHE PATENTSCHRIFT

(11) **EP 1 623 882 B1**
(45) Veröffentlichungstag und Bekanntmachung des Hinweises auf die Patenterteilung: **28.05.2008**
(21) Anmeldenummer: 05015683.5
(22) Anmeldetag: 19.07.2005
(51) Int. Cl.: B60R 21/13

(54) **Insassen-Schutzeinrichtung für ein Kraftfahrzeug**
Occupant protection device for a vehicle
Dispositif de protection des occupants pour un véhicule automobile

(30) Priorität: 03.08.2004 DE 202004012118 U
(43) Veröffentlichungstag der Anmeldung: 08.02.2006
(73) Patentinhaber: ISE Innomotive Systems Europe GmbH, 51702 Bergneustadt (DE)
(72) Erfinder: Görlach, Uwe, 51702 Bergneustadt (DE); Nowack, Reinhard, 57489 Drolshagen (DE); Menne, Hans-Gerd, 51702 Bergneustadt (DE)
(74) Vertreter: Grünecker, Kinkeldey, Stockmair & Schwanhäusser Anwaltssozietät

(56) Entgegenhaltungen:
- WO-A2-20/06008352
- DE-C2- 3 927 265

## Beschreibung

Die Erfindung betrifft eine Insassen-Schutzeinrichtung der im Oberbegriff angegebenen Art.

Bei der aus DE 195 01 584 A nach dem Oberbegriff des Anspruchs 1 bekannten Insassen-Schutzeinrichtung ist jeder ausschließlich geradlinig ausfahrbare Überrollbügel in einer die Führung definierenden Kassette in einem im Fahrzeugkörper festlegbaren Tragrahmen abgestützt. Die Kassette ist in der Querebene des Tragrahmens von unten innen nach oben außen schräg gestellt, so dass die obere Außenecke des Überrollbügels beim Ausfahren relativ zum Fahrzeugkörper von innen nach außen verlagert wird. Diese Bauweise lässt im Außenbereich des Tragrahmens und benachbart zur Fahrzeugkörper-Außenseite Bauraum für strukturelle Maßnahmen frei, z.B. für eine Verdeck-Kinematik, obwohl die Außenecke in der Schutzposition des Überrollbügels günstig weit außen positioniert ist. Die Kassette beansprucht jedoch innen unten Bauraum, der für andere strukturelle Maßnahmen im Fahrzeugkörper gebraucht würde, z.B. für eine Durchladeöffnung.

Aus DE 39 25 513 A und DE 39 26 515 A ist eine Insassen-Schutzeinrichtung bekannt, in der der Überrollbügel an einer in den Fahrzeugkörper einsetzbaren Grundplatte, d.h. einer Querwand hinter der Sitzlehne, an einer obenliegenden, der Außenseite des Fahrzeugkörpers benachbarten realen Achse so schwenkbar gelagert, dass bei einer Auslösung die Außenecke des Überrollbügels mit diesem von unten innen nach oben außen schwenkt. In der ausgefahrenen Position wird der Überrollbügel an der realen Achse und in der Mitte der Grundplatte abgestützt. Der Überrollbügel benötigt eine stabilen integrierten unteren Querträger, um bei der Zweipunkt-Abstützung die bei einem Überschlag aufzunehmenden Kräfte sicher in die Grundplatte einzuleiten. In der eingefahrenen Position befinden sich viele relativ schwere Komponenten ungünstig nahe bei der Außenseite des Fahrzeugkörpers, und wird dort relativ viel Einbauraum für diese Komponenten benötigt, der an sich im Fahrzeugkörper für andere wichtige strukturelle Maßnahmen nicht nutzbar ist. Ferner sind relativ große Massen ungünstig hoch und weit außen im Fahrzeugkörper vorhanden.

Bei der aus DE 39 27 265 A bekannten Insassen-Schutzeinrichtung ist die Führungs- und Haltekassette des Überrollbügels der Sitzlehne zugewandt konkav gekrümmt. Der Überrollbügel hat die gleiche Krümmung. Der Überrollbügel fährt im Wesentlichen parallel zur Hochachse des Fahrzeugkörpers aus, wobei sich wegen der Krümmung das obere Ende des Überrollbügels in Fahrzeuglängsrichtung der Sitzlehne nähert. Bei einer anderen Ausführungsform schwenken zwei spiegelbildliche Überrollbügelhälften um eine mittige, oben liegende reale Achse nach oben, wobei die Außenecken in der ausgefahrenen Position unzweckmäßig nach innen verlagert sind. Dies bedeutet, dass die Außenecken der beiden Überrollbügel-Hälften bei einem Überschlag relativ weit innerhalb der Schutzraum-Hüllkontur für die Insassen liegen, so dass die A-Säule des Fahrzeugkörpers einen exzessiven Teil der Überschlagkräfte aufzunehmen hat und deshalb sehr stabil auszulegen ist.

In DE 103 30 311 A wird vorgeschlagen, den aus Faserverbundkunststoff bestehenden Überrollbügel einer Insassen-Schutzeinrichtung mit einer nach außen gezogenen Außeneckenschulter auszubilden, um bei einem Überschlag den Krafteinleitungspunkt möglichst weit nach außen zu verlagern. Der Überrollbügel fährt jedoch geradlinig und im Wesentlichen parallel zur Hochachse des Fahrzeugkörpers aus und muss, falls in den Außenbereichen andere wichtige strukturelle Maßnahmen im Fahrzeugkörper vorgesehen sind, entsprechend weit nach innen versetzt sein.

Bei der in WO 2006/008352 A mit älterem Zeitrang gemäß Artikel 54(3) EPÜ offenbarten Insassenschutz-Einrichtung sind in der Mitte der Oberseite der Führung Schwenklager für die beiden Überrollbügel angeordnet. Jedes Schwenklager definiert das Schwenkzentrum eines Überrollbügels und das Krümmungszentrum für die gemeinsame Bogenkrümmung der Führung und des Überrollbügels in der Querebene des Fahrzeugkörpers. Die konkave Führungsseite weist zur Mitte der Führung. Beim Ausfahren des Überrollbügels aus der eingefahrenen Position in die Schutzposition wird die bei einem Überschlag auftretende Belastungen aufnehmende Außenecke des Überrollbügels quer zur Fahrzeugkörper-längsrichtung nach innen relativ zu ihrer Lage in der Führung in der eingefahrenen Position verlagert.

Der Erfindung liegt die Aufgabe zugrunde, eine Insassen-Schutzeinrichtung der eingangs genannten Art zu schaffen, die es ermöglicht, trotz optimal nach außen verlagertem Kraftaufnahmepunkt des Überrollbügels in dessen Schutz-Position an den Außen- und Innenseiten der Führung so viel Bauraum für andere strukturelle Maßnahmen freizulassen wie möglich.

Die gestellte Aufgabe wird mit den Merkmalen des Anspruchs 1 gelöst.

Da der Überrollbügel und die Führung eine gemeinsame Kreisbogenkrümmung von unten innen nach oben außen um ein nur virtuelles außenliegendes Krümmungszentrum aufweisen, kann der Überrollbügel mit der Führung relativ weit nach innen versetzt sein und trotzdem die Außenecke des Überrollbügels in eine optimale, d.h. weit nach außen verlagerte, Kraftaufnahmelage gebracht werden, wenn der Überrollbügel ausfährt. Da nur ein virtuelles Krümmungszentrum vorliegt, d.h. keine reale Achse oder Abstützung, und die konkave Seite der Bogenkrümmung zur Außenseite weist, ist außerhalb der Führung optimal großer Einbauraum für andere strukturelle Maßnahmen im Fahrzeugkörper freigelassen. Die Führung und der Überrollbügel umgehen sozusagen mit einem gekrümmten Verlauf diesen außenliegenden Einbauraum, der durch keinerlei Strukturen der Insassen-Schutzeinrichtung okkupiert, sondern für andere strukturelle Maßnahmen uneingeschränkt nutzbar ist. Das innere untere Ende der Führung lässt unten innen Bauraum frei. Der Überrollbügel lässt sich in der Schutzposition relativ einfach, d.h. ohne gewichtserhöhende Maßnahmen vorwiegend in der Führung abstützen, wobei die nach außen in die Kraftaufnahmelage gebrachte Außenecke des Überrollbügels Kräfte bei einem Überschlag in einer für den Fahrzeugkörper günstigen und exponierten Position aufnimmt. Dadurch kann die A-Säule des Fahrzeugkörpers entlastet und graziler ausgebildet werden. Dies ist ein aus Designgründen und Gewichtsgründen wichtiger Vorteil solcher meist ohne B-Säule ausgebildeter offener Fahrzeuge. In eingefahrenem Zustand des Überrollbügels ist eine nur geringe Massen- und Gewichtskonzentration relativ weit innen und unten gegeben, was dem Fahrverhalten zugute kommt.

In der Insassen-Schutzeinrichtung ist zweckmäßig die Querebene des Fahrzeugkörpers, entlang der sich der Überrollbügel bewegt, eben und relativ zum Fahrzeugkörperboden senkrecht oder schräggestellt, abhängig von vorgegebenen Design-Kriterien des Fahrzeugkörpers.

Bei einer alternativen Ausführungsform weist die Querebene sogar eine der Sitzebene zugewandte konkave Kreisbogenkrümmung auf, und sind auch die Führung und der Überrollbügel zusätzlich zumindest annähernd mit der gleichen Bogenkrümmung ausgebildet. Zusätzlich bedeutet hier, dass die Führung und der Überrollbügel nicht nur die gemeinsame Kreisbogenkrümmung um das virtuelle Krümmungszentrum von unten innen nach oben außen aufweisen, sondern auch in einer dazu senkrechten Richtung gekrümmt sind.

Um die obere Außenecke des Überrollbügels optimal weit nach außen zu verlagern, wenn der Überrollbügel ausgefahren ist, kann es zweckmäßig sein, an der oberen Außenecke eine nach außen weisende Schulter vorzusehen.

Da der Überrollbügel bei dieser Ausbildung keine reale Schwenkachse mit einer körperlichen Lagerung hat, kann das virtuelle Krümmungszentrum relativ weit außen positioniert sein, gegebenenfalls sogar außerhalb der Kontur des Fahrzeugkörpers. Dadurch lassen sich die Krümmung und die Positionierung der Schutzeinrichtung belastungs- und designorientiert optimieren.

Zweckmäßig ist es ferner, das virtuelle Krümmungszentrum relativ tief anzuordnen, damit die Außenecke des Überrollbügels beim Ausfahren nachhaltig nach außen verlagert wird.

Besonders zweckmäßig ist der Überrollbügel unter Verwendung von Faserverbundkunststoff, vorzugsweise sogar in Schalenbauweise, erstellt. Diese Bauweise und Materialauswahl führen zu einer deutlichen Gewichtseinsparung gegenüber metallischen Überrollbügeln, mit zumindest gleichwertigem oder sogar formentechnisch belastungsorientiertem Crash-Verhalten. Ferner lässt sich Faserverbundkunststoff problemlos in die gekrümmte Form bringen.

Zweckmäßig ist die Führung eine Kassette, die unter Verwendung von metallischen Werkstoffen, insbesondere Leichtmetall, und/oder von Faserverbundkunststoffen erstellt ist. Speziell Faserverbundkunststoff mit in eine Kunststoffmatrix eingebetteten Endlosglasfasem spart Gewicht und lässt sich in der jeweils gewünschten, gekrümmten Form problemlos verarbeiten. Auch für die Führung sollte dieser Werkstoff wegen des geringen spezifischen Gewichts und/oder leichter Formbarkeit benutzt werden.

Um weiter Gewicht zu sparen und möglichst wenig Einbauraum zu vergeuden, ist zumindest ein Ende der Führung und/oder des Überrollbügels relativ zu einer Kemlinie (die den Krümmungsverlauf repräsentiert) unter einem von 90° abweichenden Winkel schräg angeordnet sein. In der Schutzposition erbringt der Überrollbügel eine optimale Sicherheitsfunktion. In eingefahrener Position des Überrollbügels stehen keine unerwünschten Vorsprünge vor, so dass die technische Funktion der Insassen-Schutzeinrichtung ästhetisch ansprechend kaschiert sein kann.

Da es für die Schutzeinrichtung wichtig ist, dass beide Überrollbügel gleichzeitig ausgefahren werden und ihre Schutzpositionen im Wesentlichen gleichzeitig einnehmen, ist bei einer bevorzugten Ausführungsform beiden Überrollbügeln ein gemeinsamer Löseaktuator zugeordnet. Dieser Löseaktuator ist vorzugsweise elektromagnetischer oder pyrotechnischer Natur und spricht auf ein Signal eines Sensors an, um die Verriegelungsvorrichtung zu lösen. Der gemeinsame Löseaktuator spart Bauraum und Gewicht und lässt sich an passender Stelle anordnen.

Zweckmäßig umfasst der Löseaktuator eine verstellbare Klinke, mit der beide Überrollbügel über eine mit den Überrollbügel verbundene Achse festgehalten werden, solange die Überrollbügel in den eingefahrenen Positionen verriegelt sind. Die Achse wird bei Ansprechen des Löseaktuators auf das Sensorsignal durch eine Verstellung der Klinke freigegeben, so dass die Antriebselemente die beiden Überrollbügel gleichzeitig in die Schutzpositionen bringen.

Baulich einfach verbindet die Achse, an der der Löseaktuator angreift, Haltestäbe miteinander, die an den Überrollbügeln drehgelenkig angebracht sind. Mit Hilfe der Haltestäbe lässt sich der Löseaktuator in der Mitte zwischen den Überrollbügeln und günstig platzieren. Die Haltestäbe machen die Ausfahrbewegung der Überrollbügel mit.

Bei einer vorteilhaften Ausführungsform wird die Schutzstellung jedes ausgefahrenen Überrollbügels durch eine Verriegelung stabilisiert, die eine Zahnleiste am Überrollbügel und eine Verriegelungsklinke umfasst. Die Verriegelungsklinken werden, vorzugsweise, federbeaufschlagt, so dass die die Überrollbügel in der Schutzposition selbsttätig verriegeln.

Gemäß eines weiteren Aspektes sind beide Verriegelungsklinken mit einer gemeinsamen Entriegelungsvorrichtung gekoppelt, um, beispielsweise nach einer Sicherheitsauslösung der Überrollbügel ohne tatsächlich eingetretenem Fahrzeugüberschlag, die Überrollbügel gegebenenfalls von Hand wieder in die eingefahrenen Positionen rückstellen zu können. Eine gemeinsame Entriegelungsvorrichtung ist bequem zu handhaben.

Die Zahnleiste der Verriegelung kann auf dem konvex gekrümmten Seitenrand des Überrollbügels festgelegt sein. Wenn die Zahnleiste mit einem Sicherungsvorsprung ein Widerlager des Überrollbügels hintergreift, werden die über die verriegelte Verriegelung abzutragenden Kräfte großflächig übertragen.

Die jeweilige Verriegelungsklinke kann ein zweiarmiger, schwenkgelagerter Hebel sein, dessen einer Arm wenigstens einen Zahn zur Zusammenarbeit mit der Zahnleiste und dessen anderer Arm durch eine Feder so beaufschlagt wird, dass die Verriegelungsklinke in der Richtung beaufschlagt ist, in der sie sich mit der Zahnleiste verriegelt. Der durch die Feder beaufschlagte Arm ist zweckmäßig kürzer als der die Zähne tragende Arm.

Zur bequemen Rückstellung der Überrollbügel aus den Schutzpositionen sind bei einer günstigen Ausführungsform beide Verriegelungsklinken über Zugelemente mit der Entriegelungsvorrichtung gekoppelt. Dabei können zwei Zugelement oder ein gemeinsames Zugelement vorgesehen sein, und kann die Kopplung mit dem Zähne tragenden Arm erfolgen, um die Verriegelungsklinke gegen die Federkraft in die entriegelte Position zu ziehen. Bei einer zweckmäßigen Ausführungsform wird die entriegelte Position der Verriegelungsklinke zwischen einem Anschlag und einen Vorsprung der Verriegelungsklinke definiert.

Eine bequeme Handhabung bei der Rückstellung der Überrollbügel ist mit einer Entriegelungsvorrichtung gegeben, die einen zwischen den Überrollbügeln stationär gelagerten Drehgriff aufweist, mit dem die Zugelemente bzw. das Zugelement verbunden sind bzw. ist. Durch Betätigen des Drehgriffes werden beide Verriegelungen gelöst.

Bei einer bevorzugten Ausführungsform wird der Drehgriff zwischen einer Passivlage und einer offenen Lage verdreht, vorzugsweise über einen Winkel von nur 30° bis 60°, um die Verriegelungen zu lösen. Damit eine einzelne Person die Rückstellung bequem und ohne Zeitdruck auszuführen vermag, ist es günstig, wenn der Drehgriff durch eine Rasteinrichtung zumindest in der offenen Lage festlegbar ist. Dann kann nämlich ohne Halten oder Manipulieren der Entriegelungsvorrichtung an den Überrollbügeln gearbeitet werden.

Um eine saubere und rasche Ausfahrbewegung der Überrollbügel bei gelöster Verriegelungsvorrichtung gewährleisten zu können, ist es zweckmäßig, als Antriebselement eine vorgespannte Schraubendruckfeder mit einem innenliegenden Federführungsstab auszubilden, wobei die Schraubendruckfeder einer Kreisbogenlinie um das virtuelle Krümmungszentrum der Ausfahrbewegung des Überrollbügels folgen kann.

Anhand der Zeichnung werden Ausführungsformen des Erfindungsgegenstandes erläutert. Es zeigen:
- Fig. 1: eine schematische Ansicht eines Fahrzeugkörpers mit einer Insassen-Schutzeinrichtung in einem Querschnitt des Fahrzeugkörpers, wobei in der linken Hälfte von Fig. 1 ein Überrollbügel in eingefahrener Position, und in der rechten Hälfte von Fig. 1 in einer ausgefahrenen Schutzposition angedeutet ist,
- Fig. 2, 3 + 4: Seitenansichten zu Fig. 1 von unterschiedlichen Ausführungsformen der Insassen-Schutzeinrichtung,
- Fig. 5: eine Gesamtansicht einer konkreten Ausführungsform einer Insassen-Schutzeinrichtung (Überrollschutzsystem), mit in die Schutzpositionen ausgefahrenen Überrollbügeln,
- Fig. 6: eine Darstellung analog zu Fig. 5, wobei die Überrollbügel in den Schutzpositionen stabilisierende Verriegelungen deutlicher gezeigt sind,
- Fig. 7: die rechte Hälfte der Insassen-Schutzeinrichtung der Fig. 5 und 6, in einem vergrößerten Maßstab,
- Fig. 8: eine Ansicht, analog zu den Fig. 5 bis 7, mit einem weiteren Ausstattungsdetail in Form einer gemeinsamen Entriegelungsvorrichtung, und
- Fig. 9: eine Teildraufsicht zu Fig. 8.

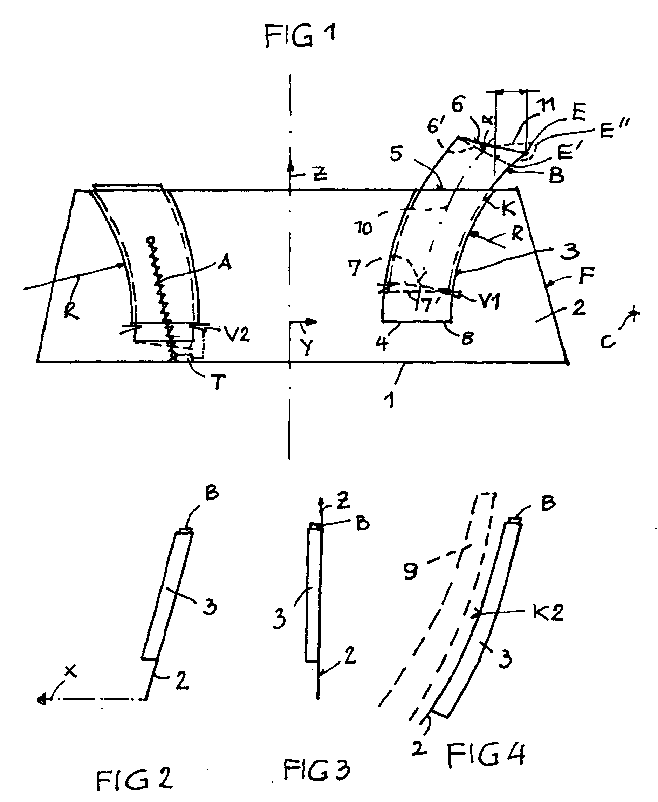

Ein in Fig. 1 schematisch in einem Querschnitt gezeigter Fahrzeugkörper F eines Kraftfahrzeugs, insbesondere eines Cabriolets, weist eine Querebene 2 auf. Diese Querebene 2 kann eine Querwand des Fahrzeugkörpers sein, oder ein Tragrahmen, oder eine andere Tragstruktur, die in den Fahrzeugkörper F wie üblich eingebaut oder einbaubar ist. Der Fahrzeugkörper F besitzt einen Boden 1 und an oder in der Querebene 2 zwei Führungen 3 für jeweils einen Überrollbügel B. Die Führungen 3 sind zweckmäßigerweise sogenannte Kassetten 8, die unter Verwendung von metallischen Werkstoffen, vorzugsweise Leichtmetall, und/oder von Faserverbundkunststoff erstellt sind. Je ein Überrollbügel B ist hinter einer in Fig. 1 nicht angedeuteten Sitzlehne des Fahrzeugs vorgesehen.

In normalem Fahrbetrieb sind die Überrollbügel B (Fig. 1 links) in einer eingefahrenen Position, in der sie nicht oder nur wenig oben aus den Führungen 3 vorstehen und darin von wenigstens einer Verriegelungsvorrichtung V2 gehalten sind. Bei einer Unfallsituation, die zu einem Überschlag führen könnte, lösen Sensoren T die Verriegelungsvorrichtung V2 bzw. Antriebselemente A aus, so dass jeder Überrollbügel B rasch in die in Fig. 1, rechts, gezeigte, ausgefahrene Schutzposition gebracht wird, in der er, beispielsweise hauptsächlich in den Führungen 3, mit einer Vorrichtung V1 verriegelt wird.

Die Führung 3 und der Überrollbügel B weisen in der Querebene 2 eine Kreisbogenkrümmung K mit einen Radius R und einem außenliegenden virtuellen Krümmungszentrum C auf. Die Krümmung K ist beispielsweise repräsentiert durch eine gemeinsame Kemlinie 10 des Überrollbügels B und der Führung 3. Die Krümmung K ist so in der Querebene 2 angeordnet, dass sie von unten innen nach oben außen um außenliegenden Einbauraum im Fahrzeugkörper F herum verläuft. Dies bedeutet, dass ein unteres Ende 4 der Führung 3 weiter innen bei der Hochachse (Z-Richtung) liegt, als ein oberes Ende 5 der Führung 3, das in der quer zur Fahrzeuglängsrichtung verlaufenden Y-Richtung weiter außen positioniert ist. Das virtuelle Krümmungszentrum C ist seitlich beabstandet von der Führung 3 und befindet sich, vorzugsweise in Z-Richtung auf einer Höhe näher beim unteren Ende 4 der Führung 3 als beim oberen Ende 5. Zumindest ein Ende 4 und/oder 5 der Führung 5 kann unter einem von 90° abweichenden Winkel gegenüber der Kemlinie 10 schräg sein.

Der Überrollbügel B hat die gleiche Kreisbogenkrümmung K, repräsentiert durch die Kemlinie 10, und eine Außenecke E, E' oder E" an einem oberen Ende 6, 6'. Ein unteres Ende 7 oder 7' des Überrollbügels B ist entweder im Wesentlichen senkrecht zur Kemlinie 10 oder liegt unter einem von 90° abweichenden Winkel schräg zur Kemlinie 10.

Die Außenecke E, E', E" wird um ein Maß m aus der Lage bei eingefahrenem Überrollbügel B in der Y-Richtung nach außen in eine Kraftaufnahme-Lage verlagert, wenn der Überrollbügel B ausfährt. Diese Kraftaufnahme-Lage der Außenecke E, E', E" befindet sich möglichst weit in Y-Richtung von der Z-Hochachse entfernt.

Wie bei 6' angedeutet, kann das obere Ende des Überrollbügels B im Wesentlichen senkrecht zur Kemlinie 10 verlaufen, bzw. die übliche (nicht gezeigte) gerundete Kontur eines Überrollbügels bilden. Alternativ und in ausgezogener Linie gezeigt, kann das Ende 6 einen mit der Kemlinie 10 einen von 90° abweichenden Winkel α einschließen, d.h. so schräg liegen, dass das Ende 6 in ausgefahrenem Zustand in etwa parallel zur Y-Richtung bis zur Außenecke E verläuft. Die Außenecke E" kann von einer nach außen gezogenen Schulter 11 am Ende 6 gebildet sein.

Die Fig. 2 deutet an, dass die Querebene 2 gegenüber der Fahrzeugkörperlängsachse (X-Richtung) schräg gestellt aber eben ist, so dass auch die Führung 3 und der Überrollbügel B in dieser Seitenansicht eben sind, während in Fig. 3 die Querebene 3 eben aber im Wesentlichen senkrecht zum Boden 1 bzw. in Z-Richtung verläuft.

In Fig. 4 ist die Querebene 2 mit einer zur davor positionierten Sitzlehne 9 weisenden konkaven Kreisbogenkrümmung K2 ausgebildet. Die Führung 3 und der Überrollbügel B sind im Wesentlichen mit der gleichen Kreisbogenkrümmung K2 (in dieser Ansicht) gekrümmt. D.h., die Führung 3 und der Überrollbügel B haben eine Zweifachkrümmung K, K2.

Im normalen Fahrbetrieb sind beiden Überrollbügel B gegen die Kraft der Aktuatoren A eingefahren und von den Verriegelungsvorrichtungen V2 verriegelt. Spricht der Sensor T an, dann werden beide Verriegelungsvorrichtungen V2 gelöst, und beide Überrollbügel B schlagartig von den Antriebselementen A in die Schutzpositionen gebracht und mit den Verriegelungsvorrichtungen V1, z.B. gegenüber den Führungen 3, verriegelt. Dabei wird jede Außenecke E, E' oder E" um das Maß m in Y-Richtung verlagert. Bei einem Überschlag an den Überrollbügeln B auftretende Belastungen werden über die Führungen 3, die Verriegelungseinrichtungen V1, und die Querebene 2 in den Fahrzeugkörper F eingeleitet.

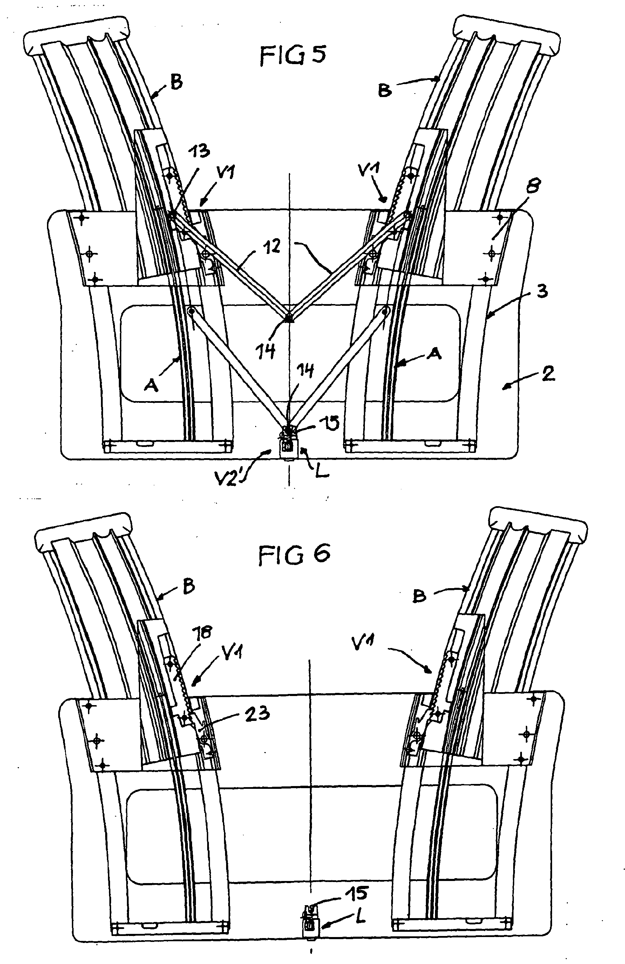

Eine in den Fig. 5 bis 9 gezeigte, konkrete Ausführungsform der Insassen-Schutzeinrichtung, die in den Fig. 1 bis 4 nur schematisch dargestellt ist, zeigt als zusätzliche Ausstattungsdetails das Konzept einer Verriegelungsvorrichtung V2', mit der die Überrollbügel B in den eingefahrenen Positionen gehalten und an dieser bei Bedarf ausgelöst werden, sowie die Verriegelungen V1, die die ausgefahrenen Schutzpositionen der Überrollbügel B stabilisieren, und eine beiden Überrollbügeln gemeinsame Entriegelungsvorrichtung 30.

In Fig. 5 ist an jedem Überrollbügel B im Bereich des konvex gekrümmten Randes ein Haltestab 12 in einem Drehgelenk 13 schwenkbar angelenkt. Beide Haltestäbe 12 werden über eine Gelenk-Achse 14 miteinander verbunden. Die beiden Haltestäbe 12 machen die Ausfahrbewegung der Überrollbügel B mit, wobei sich ihr Knickwinkel etwas vergrößert.

In den eingefahrenen Positionen der beiden Überrollbügel B (in Fig. 5 sind nur die entsprechenden Positionen der Haltestäbe 12 gezeigt) ist die Achse 14 in der Verriegelungsvorrichtung V2' festgelegt. Zu diesem Zweck ist in der Mitte zwischen den Überrollbügeln und beispielsweise an der Querwand 2 ein beiden Überrollbügeln B gemeinsamer Löseaktuator L montiert, der eine verstellbare Klinke 15 zum Halten und Freigeben der Achse 14 aufweist. Der Löseaktuator L ist beispielsweise elektromagnetischer oder pyrotechnischer Natur und spricht auf ein Signal des in Fig. 5 nicht gezeigten Sensors T mit der Freigabe der Achse 14 an. Nach Freigabe der Achse 14 werden die beiden Überrollbügel B von den Antriebselementen A in die in Fig. 5 gezeigten Schutzpositionen ausgeschoben. Die Klinke 15 ist beispielsweise federbeaufschlagt (nicht gezeigt), so dass beim Einschieben der Überrollbügel B die Achse 14 die Klinke 15 wegdrückt und selbsttätig gefangen wird.

Die beiden Verriegelungen V1, die die Schutzpositionen der ausgefahrenen Überrollbügel B in Fig. 6 stabilisieren, umfassen jeweils eine im konvexen Randbereich des Überrollbügels B festgelegte Zahnleiste 18 und eine stationär gelagerte Verriegelungsklinke 23, die bei der Ausfahrbewegung des ihr zugeordneten Überrollbügels B selbsttätig in die Zahnleiste 18 zum Eingriff gelangt und ein Zurückdrücken des Überrollbügels B verhindert.

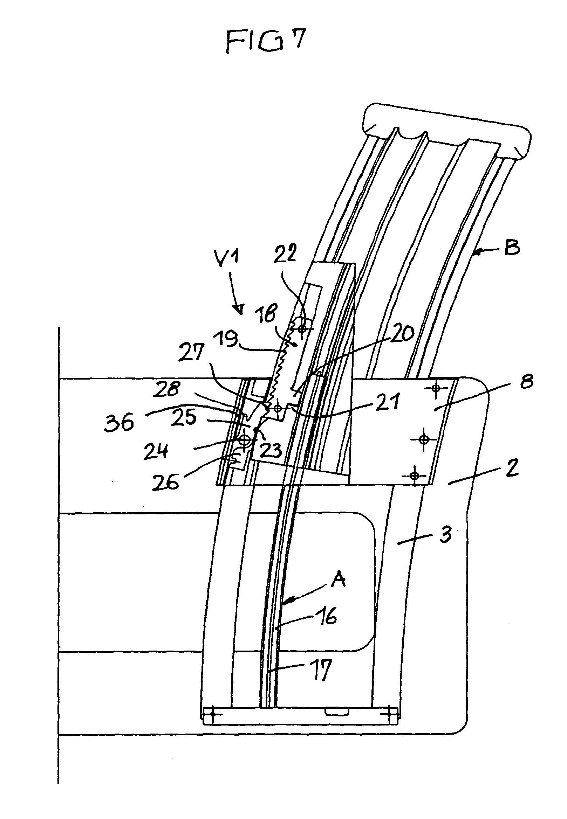

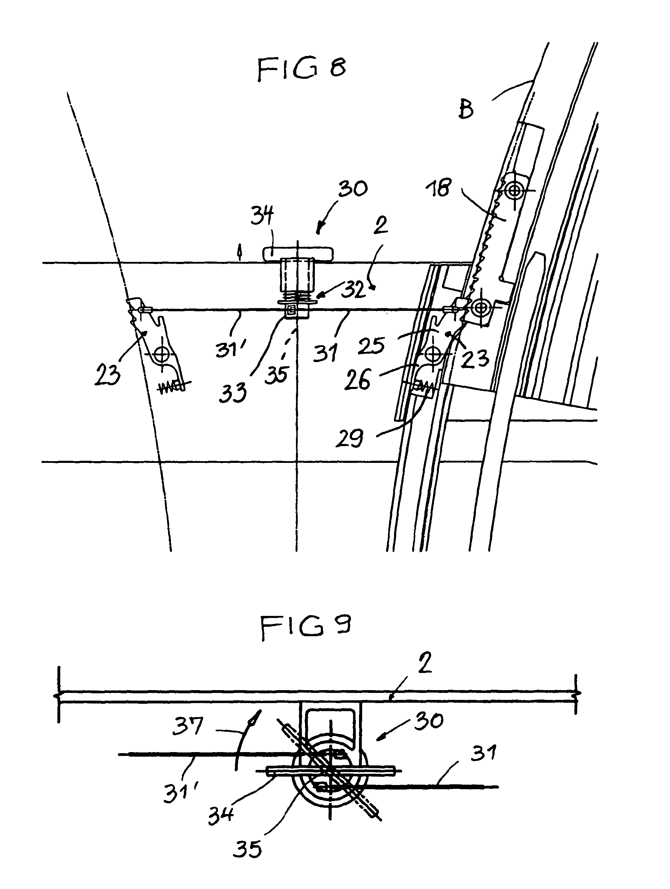

Die in Fig. 7 in vergrößertem Maßstab gezeigte, rechte Hälfte der Insassen-Schutzeinrichtung verdeutlicht den Aufbau der Verriegelung V1. Die Zahnleiste 18 ist beispielsweise mit Befestigungselementen 22 im oder auf dem Randbereich des Überrollbügels B festgelegt. Als zusätzliche Sicherungsmaßnahme kann ein Sicherungsvorsprung 20 der Zahnleiste 18 ein Widerlager 21 des Überrollbügels B hintergreifen oder in eine entsprechend geformte Vertiefung eingreifen, um eine großflächige Kraftübertragung zu gewährleisten. Seitlich neben der Bewegungsbahn der Zahnleiste 18 ist die Sperrklinke 23 auf einer Achse 24, beispielsweise der Kassette 8 bzw. der Führung 3, oder auch in der Querwand 2, schwenkbar gelagert. Die Verriegelungsklinke 23 ist bei dieser Ausführungsform als zweiarmiger Hebel mit einem längeren Arm 25 und einem kürzeren Arm 26 ausgebildet. Der längere Arm 25 trägt zumindest einen Zahn 27 zur Zusammenarbeit mit Zähnen 19 der Zahnleiste 18. Der kürzere Arm 26 wird (Fig. 8) durch eine Feder 29 so beaufschlagt, dass die Verriegelungsklinke 23 bei der Ausfahrbewegung des Überrollbügels B über die Zähne 19 ratscht und den Eingriff selbsttätig herstellt.

In Fig. 7 ist am längeren Arm 25 ein Vorsprung 28 vorgesehen, der mit einem stationären Anschlag 36 zusammenwirkt, um eine entriegelte Position (nicht gezeigt) der Verriegelungsklinke 23 zu definieren.

Das Antriebselement A ist zweckmäßig eine vorgespannte Schraubendruckfeder 16, in deren Inneren ein Federführungsstab 17 angeordnet ist. Die Schraubendruckfeder 16 verläuft in einem rohrförmigen Kanal des Überrollbügels B und stützt sich dort an einem nicht näher hervorgehobenen Anschlag ab.

Die in den Fig. 8 und 9 gezeigte, beiden Überrollbügeln gemeinsame Entriegelungsvorrichtung 30 ist in der Mitte zwischen den beiden Überrollbügeln B beispielsweise an der Querwand 2 festgelegt. Jede Sperrklinke 23 ist über ein Zugelement 31, 31' mit der Entriegelungsvorrichtung 30 gekoppelt, wobei die Zugelemente 31, 31' beispielsweise an den längeren Armen 25 angreifen. Die Zugelemente können Seilzüge sein. Bei einer nicht gezeigten Alternative ist ein beiden Verriegelungsklinken 23 gemeinsames Zugelement vorgesehen.

Die Entriegelungsvorrichtung 30 weist einen Drehgriff 34 mit einer Wickelwelle 33 auf, deren Drehachse 35 beispielsweise weitgehend vertikal oder parallel zur Querwand 2 verläuft. Dem Drehgriff 34 bzw. der Wickelwelle 33 ist eine selbsttätige lösbare Verriegelungsvorrichtung 32 zugeordnet, derart, dass der Drehgriff 34 zumindest in der offenen, den entriegelten Positionen der Verriegelungsklinke 23 zugeordneten Lage selbsttätig haltbar ist.

Zum Entriegeln der Verriegelungsklinken 23 wird der Drehgriff 34 (Fig. 9) beispielsweise über ca. 30 bis 60° verdreht, bis die Sperrklinken 23 ihre offenen Positionen (definiert zwischen den Vorsprüngen 28 und den Anschlägen 36) erreicht haben. Dann greift die Rasteinrichtung 32, um den Drehgriff 34 unter dem Zug der Zugelemente 31, 31' festzulegen. Die beiden Überrollbügel B können nun beispielsweise manuell eingefahren werden, bis die Achse 14 von der Klinke 15 wieder gefangen ist. Dann wird der Drehgriff 34 in die Position zurückgestellt, die in Fig. 9 in durchgehenden Linien gezeigt ist.

## Patentansprüche

1. Insassen-Schutzeinrichtung für einen Fahrzeugkörper (F), mit wenigstens einem im Fahrzeugkörper (F) hinter einer Sitzlehne (9) in einer Führung (3) durch ein Antriebselement (A) aus einer eingefahrenen Position in eine durch eine Verriegelung (V1) stabilisierte Schutzstellung relativ zur Führung (3) ausfahrbaren Überrollbügel (B), dessen obere Außenecke (E, E', E") in der Schutzposition eine gegenüber der eingefahrenen Position in Y-Richtung quer zur Fahrzeuglängsrichtung (X) nach außen und zur Oberseite der Führung (3) verlagerte Kraftaufnahmelage einnimmt, wobei die Außenecke in der Schutzposition bei einem Überschlag auftretende Belastungen aufnimmt, die vom Überrollbügel (B) über die Führung (3) in den Fahrzeugkörper (F) eingeleitet werden, **dadurch gekennzeichnet, dass** die Führung (3) und der Überrollbügel (B) eine gemeinsame, mit der konkaven Krümmungsseite zur Außenseite der Führung (3) und des Überrollbügels (B) weisende Kreisbogenkrümmung (K) aufweisen, die um ihr in Bezug auf den Fahrzeugkörper hochachse (Z) an der Außenseite der Führung (3) und des Überrollbügels (B) nach der Konkaven Krümmung liegendes Krümmungszentrum (C) von unten innen in einer Querebene (2) des Fahrzeugkörpers (F) nach oben außen verläuft.

2. Insassen-Schutzeinrichtung nach Anspruch 1, **dadurch gekennzeichnet, dass** auch die Querebene (2) eine mit der konkaven Krümmungsseite der Sitzlehne (9) zugewandte Kreisbogenkrümmung (K2) aufweist, und dass die Führung (3) und der Überrollbügel (B) zusätzlich zumindest annähernd mit der Kreisbogenkrümmung (K2) der Querebene (2) ausgebildet sind.

3. Insassen-Schutzeinrichtung nach Anspruch 1, **dadurch gekennzeichnet, dass** die obere Außenecke (E") an einer am Überrollbügel (B) nach außen weisenden Schulter (11) des Überrollbügels (B) vorgesehen ist.

4. Insassen-Schutzeinrichtung nach Anspruch 1, **dadurch gekennzeichnet, dass** das Krümmungszentrum (C) quer zur Fahrzeugkörper-Längsrichtung zur Außenseite der Führung (3) von der Führung (3) beabstandet ist, vorzugsweise außerhalb des Fahrzeugkörpers (F) liegt.

5. Insassen-Schutzeinrichtung nach Anspruch 1, **dadurch gekennzeichnet, dass** das Krümmungszentrum (C) relativ zu unteren und oberen Enden (4, 5) der Führung (3) in einer Höhenposition näher beim unteren Ende (4) der Führung (3) liegt.

6. Insassen-Schutzeinrichtung nach Anspruch 1, **dadurch gekennzeichnet, dass** der Überrollbügel (B) aus Faserverbundkunststoff, vorzugsweise in Schalenbauweise, erstellt ist.

7. Insassen-Schutzeinrichtung nach Anspruch 1, **dadurch gekennzeichnet, dass** die Führung (3) eine Kassette ist, die unter Verwendung von Metall, vorzugsweise Leichtmetall, und/oder von Faserverbundkunststoff erstellt ist.

8. Insassen-Schutzeinrichtung nach Anspruch 1, **dadurch gekennzeichnet, dass** zumindest ein Ende (4, 5, 6, 6', 7, 7') der Führung (3) und/oder des Überrollbügels (B) relativ zu einer Kernlinie (10) der Überrollbügels (B) unter einem von 90° abweichenden Winkel (α) angeordnet ist.

9. Insassen-Schutzeinrichtung nach Anspruch 1, **dadurch gekennzeichnet, dass** zwei quer zur Längsrichtung des Fahrzeugkörpers (F) nebeneinander liegende Überrollbügel (B) vorgesehen sind, dass beide Überrollbügel (B) in ihren eingefahrenen Positionen durch eine oder zwei Verriegelungsvorrichtungen (V2, V2') gehalten sind, und dass zum gleichzeitigen Auslösen beider Überrollbügel der oder den Verriegelungsvorrichtungen (V2, V2') ein gemeinsamer, vorzugsweise elektromagnetischer oder pyrotechnischer, auf ein Signal eines Sensors (T) ansprechender, Löseaktuator (L) zugeordnet ist.

10. Insassen-Schutzeinrichtung nach Anspruch 9, **dadurch gekennzeichnet, dass** der Löseaktuator (L) eine verstellbare Klinke (15) aufweist, mit der beide Überrollbügel (B) in den eingefahrenen Positionen über eine mit den Überrollbügeln (B) verbundene Achse (14) festhaltbar sind, und dass die Achse (14) bei Ansprechen des Löseaktuators (L) auf das Sensorsignal durch eine Verstellung der Klinke (15) freigebbar ist.

11. Insassen-Schutzeinrichtung nach Anspruch 10, **dadurch gekennzeichnet, dass** die Achse (14) an beiden Überrollbügeln drehgelenkig angebrachte Haltestäbe (12) miteinander verbindet.

12. Insassen-Schutzeinrichtung nach Anspruch 1, **dadurch gekennzeichnet, dass** die die Schutzstellung des ausgefahrenen Überrollbügels (B) stabilisierende Verriegelung (V1) eine Zahnleiste (18) am Überrollbügel (B) und eine relativ zum Überrollbügel (B) stationär und verstellbar gelagerte, in Richtung zu einer Eingriffsstellung in die Zahnleiste (18) durch Federkraft beaufschlagte Verriegelungsklinke (23) umfasst, und dass beide Verriegelungsklinken (23) zweier nebeneinander angeordneter Überrollbügel, vorzugsweise über wenigstens ein Zugelement (31, 31'), mit einer gemeinsamen Entriegelungsvorrichtung (30) gekoppelt sind.

13. Insassen-Schutzeinrichtung nach Anspruch 12, **dadurch gekennzeichnet, dass** die Zahnleiste (18) auf dem konvex gekrümmten Seitenrand des Überrollbügels (B) festgelegt ist und, vorzugsweise, mit einem Sicherungsvorsprung (20) ein im Überrollbügel (B) vorgesehenes Widerlager (21) hintergreift.

14. Insassen-Schutzeinrichtung nach Anspruch 13, **dadurch gekennzeichnet, dass** die Verriegelungsklinke (23) ein zweiarmiger Hebel ist, der zwischen den Armen (25, 26) auf einer Achse (24) schwenkgelagert ist, dessen einer Arm (25) wenigstens einen Zahn (27) trägt, und dessen anderer, vorzugsweise kürzerer, Arm (26) durch eine Feder (29) beaufschlagt ist.

15. Insassen-Schutzeinrichtung nach Anspruch 12, **dadurch gekennzeichnet, dass** die Entriegelungsvorrichtung (30) einen zwischen den beiden Überrollbügeln (B) stationär gelagerten Drehgriff (33, 34) zum Betätigen des Zugelementes (31, 31') aufweist.

16. Insassen-Schutzeinrichtung nach Anspruch 15, **dadurch gekennzeichnet, dass** der Drehgriff (33, 34) zwischen einer Passivlage und einer offenen, der entriegelten Position der Verriegelungsklinken (23) zugeordneten, Lage drehbar ist, vorzugsweise über einen Winkel von ca. 30 bis 60°, und dass eine Rasteinrichtung (32) zum Festlegen des Drehgriffs (33, 34) zumindest in der offenen Lage vorgesehen ist.

17. Insassen-Schutzeinrichtung nach Anspruch 1, **dadurch gekennzeichnet, dass** das Antriebselement (A) zum Ausfahren des Überrollbügels (B) in die Schutzposition zumindest eine vorgespannte, vorzugsweise einer Kreisbogenlinie um das Krümmungszentrum (C) folgende, Schraubendruckfeder (16) mit einem innenliegenden Federführungsstab (17) ist.

## Claims

1. Occupant protection device for a vehicle body (F), comprising at least one roll-over bar (B), which in the vehicle body (F) behind a seat back (9) in a guide (3) is extendable by means of a drive element (A) relative to the guide (3) from a retracted position into a protection position that is stabilized by means of a locking device (V1) and of which the top outer corner (E, E', E") in the protection position assumes a force take-up position, which compared to the retracted position is displaced out in Y-direction transversely of the vehicle longitudinal direction (X) and towards the top of the guide (3), wherein the outer corner in the protection position takes up loads arising in the event of a rollover, which loads are introduced from the roll-over bar (B) via the guide (3) into the vehicle body (F), **characterized in that** the guide (3) and the roll-over bar (B) have a common circular arc curvature (K) that is oriented with the concave curvature side towards the outside of the guide (3) and the roll-over bar (B) and extends about its centre of curvature (C), which lies in relation to the vehicle vertical axis (Z) at the outside of the guide (3) and the roll-over bar (B) in accordance with the concave curvature, from an internal lower point to an external upper point in a transverse plane (2) of the vehicle body (F).

2. Occupant protection device according to claim 1, **characterized in that** the transverse plane (2) also has a circular arc curvature (K2) with the concave curvature side facing the seat back (9), and that the guide (3) and the roll-over bar (B) are additionally designed at least approximately with the circular arc curvature (K2) of the transverse plane (2).

3. Occupant protection device according to claim 1, **characterized in that** the top outer corner (E") is provided on a shoulder (11) of the roll-over bar (B) that faces outwards on the roll-over bar (B).

4. Occupant protection device according to claim 1, **characterized in that** the centre of curvature (C) is spaced apart from the guide (3) transversely of the vehicle body longitudinal direction towards the outside of the guide (3), and preferably lies outside of the vehicle body (F).

5. Occupant protection device according to claim 1, **characterized in that** the centre of curvature (C) is situated relative to bottom and top ends (4, 5) of the guide (3) at a level closer to the bottom end (4) of the guide (3).

6. Occupant protection device according to claim 1, **characterized in that** the roll-over bar (B) is manufactured from fibre composite plastics material, preferably in a shell-type style of construction.

7. Occupant protection device according to claim 1, **characterized in that** the guide (3) is a cartridge, which is manufactured using metal, preferably light metal, and/or fibre composite plastics material.

8. Occupant protection device according to claim 1, **characterized in that** at least one end (4, 5, 6, 6', 7, 7') of the guide (3) and/or of the roll-over bar (B) is disposed at an angle (α) other than 90° relative to a core line (10) of the roll-over bar (B).

9. Occupant protection device according to claim 1, **characterized in that** two roll-over bars (B) juxtaposed transversely of the longitudinal direction of the vehicle body (F) are provided, that both roll-over bars (B) are held in their retracted positions by means of one or two locking devices (V2, V2'), and that for the simultaneous release of both roll-over bars there is associated with the locking device or locking devices (V2, V2') a common, preferably electromagnetic or pyrotechnic release actuator (L) that responds to a signal of a sensor (T).

10. Occupant protection device according to claim 9, **characterized in that** the release actuator (L) comprises an adjustable pawl (15), by means of which both roll-over bars (B) may be held fast in the retracted positions via an axle (14) connected to the roll-over bars (B), and that, when the release actuator (L) responds to the sensor signal, the axle (14) is releasable by means of an adjustment of the pawl (15).

11. Occupant protection device according to claim 10, **characterized in that** the axle (14) connects retaining rods (12), which are mounted in a hinged manner on both roll-over bars, to one another.

12. Occupant protection device according to claim 1, **characterized in that** the locking device (V1) that stabilizes the protection position of the extended roll-over bar (B) comprises a toothed strip (18) on the roll-over bar (B) and a locking pawl (23), which is mounted in a stationary and adjustable manner relative to the roll-over bar (B) and loaded by spring action in the direction of a position of engagement into the toothed strip (18), and that both locking pawls (23) of two juxtaposed roll-over bars are coupled, preferably by at least one tension element (31, 31'), to a common unlocking device (30).

13. Occupant protection device according to claim 12, **characterized in that** the toothed strip (18) is fastened on the convexly curved side edge of the roll-over bar (B) and, preferably, engages with a securing projection (20) behind an abutment (21) provided in the roll-over bar (B).

14. Occupant protection device according to claim 13, **characterized in that** the locking pawl (23) is a two-armed lever, which is pivotably mounted between the arms (25, 26) on an axle (24) and of which one arm (25) carries at least one tooth (27) and the other, preferably shorter, arm (26) is loaded by a spring (29).

15. Occupant protection device according to claim 12, **characterized in that** the unlocking device (30) comprises a turning handle (33, 34) mounted in a stationary manner between the two roll-over bars (B) for actuating the tension element (31, 31').

16. Occupant protection device according to claim 15, **characterized in that** the turning handle (33, 34) is rotatable, preferably through an angle of ca. 30 to 60°, between a passive position and an open position associated with the unlocked position of the locking pawls (23) and that a detent device (32) is provided for fixing the turning handle (33, 34) at least in the open position.

17. Occupant protection device according to claim 1, **characterized in that** the drive element (A) for extending the roll-over bar (B) into the protection position is at least one biased helical pressure spring (16), which preferably follows a circular arc line about the centre of curvature (C) and has an internal spring guide rod (17).

## Revendications

1. Dispositif de protection des occupants d'un véhicule destiné à un corps de véhicule (F), comportant au moins un arceau de sécurité (B), qui est monté dans le corps du véhicule (F) derrière un dossier de siège (9) dans un guidage (3) et peut être extrait par rapport au guidage (3) par un élément de transmission (A) hors d'une position rentrée dans une position de protection stabilisée par un verrouillage (V1), et dont l'angle extérieur (E, E', E") supérieur dans la position de protection est amené dans une position d'absorption de force, décalée par rapport à la position rentrée dans la direction Y, transversalement à la direction longitudinale (X) du véhicule vers l'extérieur et au côté supérieur du guidage (3), l'angle extérieur dans la position de protection absorbant des sollicitations générées pendant un tonneau du véhicule et introduites par l'arceau de sécurité (B) dans le corps du véhicule (F) par l'intermédiaire du guidage (3), **caractérisé en ce que** le guidage (3) et l'arceau de sécurité (B) comportent une courbure en arc de cercle (K) commune, qui est orientée avec le côté concave vers le côté extérieur du guidage (3) et de l'arceau de sécurité (B) et qui s'étend depuis le bas à l'intérieur dans un plan transversal (2) du corps du véhicule (F) vers le haut à l'extérieur autour de son centre (C) disposé, par référence à l'axe vertical (Z) du corps du véhicule, sur le côté extérieur du guidage (3) et de l'arceau de sécurité (B) en aval de la courbure concave.

2. Dispositif de protection des occupants d'un véhicule selon la revendication 1, **caractérisé en ce que** le plan transversal (2) comporte également une courbure en arc de cercle (K2) orientée avec le côté concave vers le dossier de siège (9), et **en ce que** le guidage (3) et l'arceau de sécurité (B) sont réalisés, en plus, au moins à peu près avec la courbure en arc de cercle (K2) du plan transversal (2).

3. Dispositif de protection des occupants d'un véhicule selon la revendication 1, **caractérisé en ce que** l'angle extérieur (E") supérieur est prévu sur un épaulement (11) de l'arceau de sécurité (B), orienté vers l'extérieur sur l'arceau de sécurité (B).

4. Dispositif de protection des occupants d'un véhicule selon la revendication 1, **caractérisé en ce que** le centre de courbure (C) est situé à distance du guidage (3) dans le sens transversal par rapport à la direction longitudinale du corps du véhicule vers le côté extérieur du guidage (3), et est situé de préférence en dehors du corps du véhicule (F).

5. Dispositif de protection des occupants d'un véhicule selon la revendication 1, **caractérisé en ce que** le centre de courbure (C), par rapport aux extrémités inférieures et supérieures (4, 5) du guidage (3), se situe dans une position en hauteur plus près de l'extrémité inférieure (4) du guidage (3).

6. Dispositif de protection des occupants d'un véhicule selon la revendication 1, **caractérisé en ce que** l'arceau de sécurité (B) est réalisé dans un matériau composite renforcé par des fibres, de préférence selon un mode de construction monocoque.

7. Dispositif de protection des occupants d'un véhicule selon la revendication 1, **caractérisé en ce que** le guidage (3) est une cassette qui est réalisée moyennant l'utilisation d'un métal, de préférence un métal léger, et/ou d'un matériau composite renforcé par des fibres.

8. Dispositif de protection des occupants d'un véhicule selon la revendication 1, **caractérisé en ce qu'**au moins une extrémité (4, 5, 6, 6', 7, 7') du guidage (3) et/ou de l'arceau de sécurité (B) est agencée par rapport à un contour du noyau central (10) de l'arceau de sécurité (B) en formant un angle (α) différent de 90°.

9. Dispositif de protection des occupants d'un véhicule selon la revendication 1, **caractérisé en ce qu'**il est prévu deux arceaux de sécurité (B) situés l'un à côté de l'autre transversalement à la direction longitudinale du corps du véhicule (F), **en ce que** les deux arceaux de sécurité (B) sont maintenus dans leur position rentrée par un ou deux dispositifs de verrouillage (V2, V2'), et **en ce que** pour le déclenchement simultané des deux arceaux de sécurité, un actionneur de déclenchement (L) commun, de préférence électromagnétique ou pyrotechnique, réagissant à un signal d'un capteur (T), est associé au(x) dispositif(s) de verrouillage (V2, V2').

10. Dispositif de protection des occupants d'un véhicule selon la revendication 9, **caractérisé en ce que** l'actionneur de déclenchement (L) comporte un loquet (15) réglable, par lequel les deux arceaux de sécurité (B) peuvent être maintenus dans leur position rentrée par l'intermédiaire d'un axe (14) relié aux arceaux de sécurité (B), et **en ce que** l'axe (14) peut être libéré moyennant un déplacement du loquet (15) lorsque l'actionneur de déclenchement (L) réagit au signal du capteur.

11. Dispositif de protection des occupants d'un véhicule selon la revendication 10, **caractérisé en ce que** l'axe (14) relie entre elles des barres de fixation (12) montées de manière mobile en rotation sur les deux arceaux de sécurité.

12. Dispositif de protection des occupants d'un véhicule selon la revendication 1, **caractérisé en ce que** le verrouillage (V1), stabilisant la position de protection de l'arceau de sécurité (B) extrait, comporte une lame dentée (18) sur l'arceau de sécurité (B) et un loquet de verrouillage (23), monté de manière stationnaire et réglable par rapport à l'arceau de sécurité (B) et sollicité par une force de ressort vers une position d'engrènement dans la lame dentée (18), et **en ce que** les deux loquets de verrouillage (23) de deux arceaux de sécurité, disposés l'un à côté de l'autre, sont couplés à un dispositif de déverrouillage (30) commun, de préférence par l'intermédiaire d'au moins un élément de traction (31, 31').

13. Dispositif de protection des occupants d'un véhicule selon la revendication 12, **caractérisé en ce que** la lame dentée (18) est fixée sur le bord latéral à courbure convexe de l'arceau de sécurité (B) et s'engage, de préférence avec une saillie de blocage (20), derrière une contre-butée (21) prévue dans l'arceau de sécurité (B).

14. Dispositif de protection des occupants d'un véhicule selon la revendication 13, **caractérisé en ce que** le loquet de verrouillage (23) est un levier à deux bras, qui est monté pivotant entre les bras (25, 26) sur un axe (24), dont un bras (25) porte au moins une dent (27) et dont l'autre bras (26), de préférence plus court, est sollicité par un ressort (29).

15. Dispositif de protection des occupants d'un véhicule selon la revendication 12, **caractérisé en ce que** le dispositif de déverrouillage (30) comporte une poignée rotative (33, 34), montée de manière stationnaire entre les deux arceaux de sécurité (B) et destinée à actionner l'élément de traction (31, 31').

16. Dispositif de protection des occupants d'un véhicule selon la revendication 15, **caractérisé en ce que** la poignée rotative (33, 34) est apte à tourner, de préférence selon un angle de 30 à 60° environ, entre une position passive et une position ouverte, associée à la position déverrouillée des loquets de verrouillage (23), et **en ce qu'**il est prévu un dispositif de blocage (32) pour immobiliser la poignée rotative (33, 34) au moins dans la position ouverte.

17. Dispositif de protection des occupants d'un véhicule selon la revendication 1, **caractérisé en ce que** l'élément de transmission (A), destiné à extraire l'arceau de sécurité (B) dans la position de protection, est au moins un ressort de pression hélicoïdal (16) précontraint, qui suit de préférence une ligne en arc de cercle autour du centre de courbure (C) et est muni d'une tige de guidage (17) intérieure.
